# EUROPÄISCHE PATENTSCHRIFT

(11) **EP 2 733 095 B1**
(45) Veröffentlichungstag und Bekanntmachung des Hinweises auf die Patenterteilung: **16.09.2015**
(21) Anmeldenummer: 12007770.6
(22) Anmeldetag: 16.11.2012
(51) Int. Cl.: B65G 47/08, B65B 35/20, B65B 35/24, B65B 57/00, B65G 47/26, B65G 47/31, B65G 47/52, B65B 9/04, B65B 35/10, B65B 35/40, B65B 57/14

(54) **Vereinzelungssystem und Verfahren für Verpackungsanlage**
Separation system and method for a packaging system
Système de séparation et procédé pour installation d'emballage

(43) Veröffentlichungstag der Anmeldung: 21.05.2014
(73) Patentinhaber: Multivac Sepp Haggenmüller GmbH & Co. KG, 87787 Wolfertschwenden (DE)
(72) Erfinder: Lang, Michael, 87642 Buching (DE)
(74) Vertreter: Grünecker Patent- und Rechtsanwälte PartG mbB

(56) Entgegenhaltungen:
- EP-A1- 1 279 950
- EP-A1- 2 345 587
- EP-A1- 2 500 276
- WO-A1-2006/111142
- US-A- 3 485 339

## Beschreibung

Die Erfindung bezieht sich auf eine Verpackungsanlage gemäß den Merkmalen des Anspruchs 1 und auf ein Verfahren zum Betrieb einer solchen Verpackungsanlage.

Es ist aus der Praxis bekannt, dass nach einer mehrspurigen, intermittierend arbeitenden Tiefziehverpackungsmaschine, wie aus der EP 2 345 587 A1 bekannt, eine Einrichtung vorgesehen ist, um eine Gruppe von Packungen eines Arbeitstaktes auf eine einzige Spur zu vereinzeln. Um Packungen einzeln zu wiegen oder in einem Metalldetektor zu prüfen, darf sich nur eine Packungen auf dem Wägeband bzw. auf der Prüfstrecke befinden. Daher muss der Abstand zwischen üblicherweise direkt hintereinander und in Produktionsrichtung nachfolgenden Packungen vergrößert werden. Hierzu können, wie in der US 3,485,399 offenbart, mehrere hintereinander angeordnete Transportbänder vorgesehen sein, die jeweils eine immer höhere Transportgeschwindigkeit aufweisen. Bei jedem Bandübergang vergrößert sich der Abstand zwischen zwei aufeinander folgenden Packungen. Um diese Verpackungen nach ihrer Prüfung beispielsweise automatisch in eine Sammelverpackung zu überführen, sind eine entsprechende Anzahl von Robotern vorgesehen, um die mit hoher Geschwindigkeit zugeführten Packungen in die Sammelverpackungen umsetzen zu können. Durch die hohen Transportgeschwindigkeiten der Packungen können diese oft nur mittels mehrerer hintereinander angeordneter Roboter in eine Sammelverpackung umgesetzt werden. Hohe Geschwindigkeiten sind auch für die Aufnahme der Packungen vom Transportband durch den Roboter schwierig und es wird eine längere Zeit benötigt, da das Aufsynchronisieren des Greifers auf die Bewegung der Packung mehr Zeit erfordert.

Aufgabe der vorliegenden Erfindung ist es, eine Möglichkeit zu schaffen, bei gleichbleibender hoher Leistung einer Verpackungsanlage die Anzahl von notwendigen Robotern zum Umsetzen von Packungen von einem Transportband in eine Sammelverpackung zu reduzieren.

Diese Aufgabe wird gelöst durch eine Verpackungsanlage mit den Merkmalen des Anspruchs 1 bzw. durch ein Verfahren zum Betrieb einer solchen Verpackungsanlage mit den Merkmalen des Anspruchs 9. Vorteilhafte Weiterbildungen der Erfindung sind in den Unteransprüchen angegeben.

Die erfindungsgemäße Verpackungsanlage umfasst eine mehrspurige Verpackungsmaschine, ein mehrspuriges Vereinzelungssystem, eine erste Umsetzvorrichtung, eine zweite Umsetzvorrichtung und eine Sammelverpackungseinheit, wobei die erste Umsetzvorrichtung dazu eingerichtet ist, Packungen spurweise (d. h. Spur für Spur) der Verpackungsmaschine nacheinander mit jeweils mehreren Packungen pro Spur von der Verpackungsmaschine auf ein Transportband des Vereinzelungssystems umzusetzen. Die Erfindung zeichnet sich dadurch aus, dass das Vereinzelungssystem dazu konfiguriert ist, den Abstand von zwei in Produktionsrichtung aufeinander folgenden Packungen zu verändern, wobei die zwei aufeinander folgenden Packungen auf unterschiedlichen Spuren von zwei- oder mehrspurigen Transportbändern des Vereinzelungssystems transportierbar sind, wobei das Vereinzelungssystem wenigstens zwei Transportbänder aufweist. Dadurch ist es möglich, einerseits Packungen einzeln von Inspektionssystemen überprüfen zu können und andererseits die Packungen mit einer geringen Geschwindigkeit zwei- oder mehrspurig der zweiten Umsetzvorrichtung zuzuführen. Die geringe Geschwindigkeit sorgt dafür, dass die Zeit zum Aufsynchronisieren des Greifers der zweiten Umsetzvorrichtung auf die Packungen minimiert und damit die Leistung der zweiten Umsetzeinrichtung optimiert wird, so dass je nach Leistung der Verpackungsmaschine eventuell nur eine zweite Umsetzvorrichtung ausreichend ist, um alle Packungen beispielsweise in eine Sammelverpackung einzulegen.

Vorzugsweise umfasst das Vereinzelungssystem wenigstens ein Inspektionsmodul, um Packungen einzeln zu prüfen, wobei das Inspektionsmodul eine Mehrzahl von Spuren eines Transportbands verarbeiten kann. Dies vereinfacht die Verpackungsanlage und verringert den Raumbedarf gegenüber einer Anlage, die mit mehreren einspurigen Inspektionsmodulen ausgestattet ist, und der Aufwand für eine Spurenvereinzelung und eine Spurenzusammenführung wird verringert.

Bevorzugt ist das Inspektionsmodul ein Checkweigher (d. h. eine Wiegevorrichtung), eine Metalldetektor oder ein Röntgenkontrollgerät, die üblicherweise in der Lebensmittelindustrie eingesetzt werden.

In einer vorteilhaften Ausführung ist die erste Umsetzvorrichtung dazu konfiguriert, eine Anzahl von Packungen einer Spur der Verpackungsmaschine als Gruppe gleichzeitig auf ein erstes Transportband des Vereinzelungssystems umzusetzen.

Dabei sind vorzugsweise wenigstens ein erstes und ein zweites Transportband vorgesehen ist, wobei das zweite Transportband eine Transportgeschwindigkeit aufweist, die bevorzugt um wenigstens 30%, vorzugsweise um wenigstens 50% größer ist als eine Transportgeschwindigkeit des ersten Transportbands, um einen Abstand zwischen zwei aufeinander folgenden Packungen mit nur einem Bandübergang zu erhöhen.

In einer weiteren vorteilhaften Ausführung ist die erste Umsetzvorrichtung dazu konfiguriert, die in einer umzusetzenden Spur enthaltenen Packungen zeitlich nacheinander gestaffelt auf ein erstes Transportband des Vereinzelungssystems umzusetzen, um den Abstand zweier aufeinander folgenden Packungen zu erhöhen.

Bevorzugt ist bei der erfindungsgemäßen Verpackungsanlage ein Transportband als Stauförderer mit einer geringeren Transportgeschwindigkeit als das erste Transportband vorgesehen, um den Abstand zwischen den auf einer Spur aufeinander folgenden Packungen zu verringern. Dabei kann die Geschwindigkeit der Packungen für ein Umsetzen in einen Sammelbehälter mittels der zweiten Umsetzvorrichtung so optimiert werden, dass die Leistung der zweiten Umsetzvorrichtung gesteigert wird.

Vorzugsweise ist die zweite Umsetzvorrichtung ein Roboter und ist dazu vorgesehen, Packungen vom Vereinzelungssystem in die Sammelverpackungseinheit umzusetzen. Solche Roboter werden auch als Picker bezeichnet und können einzelne Packungen, die zuvor über ein Kamerasystem erfasst werden oder deren Position über eine Streckensteuerung bekannt ist, mit einem Greifer, beispielsweise einem Vakuumsauger des Pickers, vom Transportband abnehmen und in eine Sammelverpackung einlegen.

Ein erfindungsgemäßes Verfahren zum Betrieb einer Verpackungsanlage, die eine mehrspurige Verpackungsmaschine, ein mehrspuriges Vereinzelungssystem, eine erste Umsetzvorrichtung, eine zweite Umsetzvorrichtung und eine Sammelverpackungseinheit umfasst, wobei die erste Umsetzvorrichtung dazu eingerichtet ist, Packungen spurweise nacheinander mit jeweils mehreren Packungen pro Spur von der Verpackungsmaschine auf ein Transportband des Vereinzelungssystems umzusetzen, sieht vor, dass der Abstand von zwei aufeinander folgenden Packungen einer Spur auf dem Vereinzelungssystem so weit vergrößert wird, dass eine Prüfung von einzelnen Packungen mittels eines Inspektionsmoduls des Vereinzelungssystems erfolgen kann. Letzteres wird erreicht, indem eine Lücke zwischen aufeinander folgenden Packungen gleich groß oder größer gemacht wird als die Länge einer einzelnen Packung.

Bevorzugt wird der Abstand der Packungen nach dem Inspektionsmodul mittels eines weiteren Transportbands, beispielsweise eines Stauförderers, reduziert, damit eine für einen Roboter optimierte Geschwindigkeit der Packungen zum Umsetzen der Packungen einen Sammelbehälter erreicht wird.

In einer besonders vorteilhaften Ausführung werden die Packungen vom Vereinzelungssystem mittels wenigstens der zweiten Umsetzvorrichtung, vorzugsweise nur einem Roboter, in der Sammelverpackungseinheit in einen Sammelbehälter umgesetzt, wobei die Packungen mehrspurig, vorzugsweise zweispurig der zweiten Umsetzvorrichtung zugeführt werden. Dabei kann die Leistung der zweiten Umsetzvorrichtung an die Leistung der Verpackungsmaschine so angepasst sein, dass nur eine einzige zweite Umsetzvorrichtung notwendig ist und die Kosten und der Raumbedarf einer solchen Verpackungsanlage reduziert werden können.

In einer vorteilhaften Variante des erfindungsgemäßen Verfahrens setzt die erste Umsetzvorrichtung die Packungen auf das erste Transportband einzeln nacheinander ab, um den Abstand zwischen zwei aufeinander folgenden Packungen so zu vergrößern, dass in dem Inspektionsmodul die Prüfung einer einzelnen Packung erfolgt.

In einer weiteren vorteilhaften Variante setzt die erste Umsetzvorrichtung die Packungen als Gruppe gemeinsam auf das erste Transportband ab und durch wenigstens ein zweites Transportband, das mit einer höheren Transportgeschwindigkeit als das erste Transportband betrieben wird, wird der Abstand zwischen zwei aufeinanderfolgenden Packungen so vergrößert, dass in dem Inspektionsmodul die Prüfung einer einzelnen Packung erfolgt.

Die Packungen werden vorzugsweise von einer mehrspurigen Verpackungsmaschine an ein zweispuriges Vereinzelungssystem übergeben.

Bevorzugt werden die Packungen zweispurig entlang des Inspektionsmoduls und der zweiten Umsetzvorrichtung transportiert, somit sind nur ein einziges Inspektionsmodul und eine einzige Umsetzvorrichtung notwendig, welches Raumbedarf und Kosten spart.

Sowohl für die Verpackungsanlage, als auch für das Verfahren kann es vorteilhaft sein, wenn die erste Umsetzvorrichtung die nacheinander umgesetzten Spuren von Packungen alternierend auf die zwei oder mehr Spuren des ersten Transportbands des Vereinzelungssystems absetzt. Dadurch wird erreicht, dass jeweils nach bestimmten Intervallen auf jeder Spur ein größerer Abstand zwischen aufeinanderfolgenden Packungen entsteht.

Im Folgenden wird ein vorteilhaftes Ausführungsbeispiel der Erfindung anhand einer Zeichnung näher erläutert. Im Einzelnen zeigt:

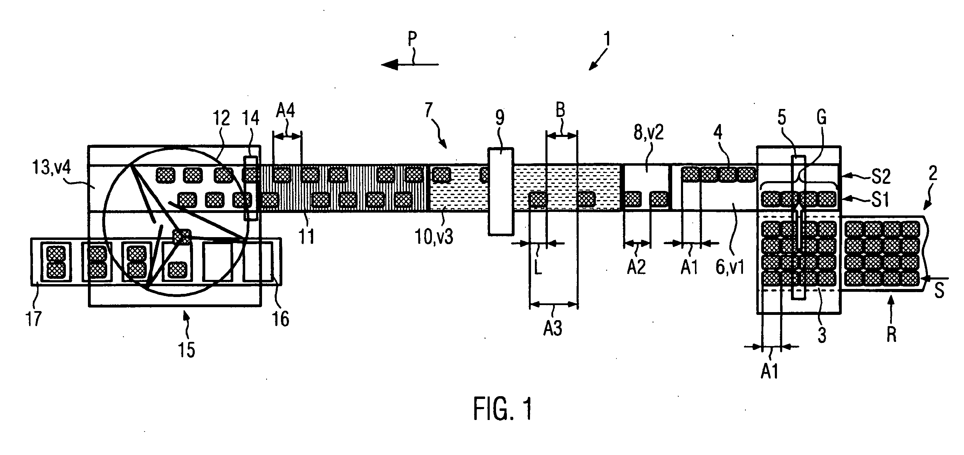

- Fig. 1: eine erfindungsgemäße Verpackungsanlage in der Draufsicht.

Fig. 1 zeigt eine erfindungsgemäße Verpackungsanlage 1 mit einer Produktionsrichtung R und einer Verpackungsmaschine 2 am rechten Zeichnungsrand. Die Verpackungsmaschine 2 weist in Produktionsrichtung R vier Spuren S auf und produziert innerhalb eines Arbeitstaktes vier quer zur Produktionsrichtung R ausgerichtete Reihen R von Packungen 4. Die Verpackungsmaschine 2 kann eine intermittierend arbeitende Tiefziehverpackungsmaschine sein und auf ihrem Abführband 3 ein Format von vier mal vier Packungen 4 für eine erste Umsetzvorrichtung 5 bereitstellen. Die erste Umsetzvorrichtung 5 ist in der Fig. 1 als Zweiachsroboter ausgeführt, der nacheinander jeweils eine Spur S mit je vier Packungen 4 vom Abführband 3 abnimmt und auf ein erstes Transportband 6 eines Vereinzelungssystems 7 übergibt.

Die erste Umsetzvorrichtung 5 setzt die vier Packungen 4 gemeinsam als Gruppe auf das erste Transportband 6 ab. Das Vereinzelungssystem 7 ist zweispurig ausgeführt mit einer ersten Spur S1 und einer zweiten Spur S2. Die Verpackungsmaschine 2 arbeitet beispielsweise mit 10 Takten pro Minute und erzeugt bei einem Format von vier mal vier Packungen 4 insgesamt 160 Packungen pro Minute. Die erste Umsetzvorrichtung 5 hat somit 5 bis 6 Sekunden Zeit, jeweils eine Gruppe G von Packungen der Spuren S abwechselnd, d. h. alternierend auf die zwei Spuren S1 und S2 des ersten Transportbands 6 des Vereinzelungssystems 7 umzusetzen, bevor die Verpackungsmaschine 2 das nächste Format mit 16 Packungen 4 auf dem Abführband 3 bereitstellt. Das erste Transportband 6 ist also z. B. durch seine Breite dazu konfiguriert, nebeneinander zwei Spuren S1, S2 von Packungen 4 zu transportieren.

Das erste Transportband 6 weist beispielsweise eine Transportgeschwindigkeit v1 von 20 m/min auf, wobei Gruppen G von Packungen 4 auf den zwei Spuren S1, S2 in Produktionsrichtung R versetzt und hintereinander angeordnet sind. Um den Abstand A1 von zwei aufeinander folgenden Packungen 4 von beispielsweise 200 mm, in Fig. 1 nicht maßstabsgetreu dargestellt, zu erhöhen, ist ein zweispuriges zweites Transportband 8 dem ersten Transportband 6 nachgeschaltet, das eine Transportgeschwindigkeit v2 von beispielsweise 30 m/min aufweist. Der Abstand A2 ist nun 300 mm, aber noch nicht ausreichend, als dass die Packungen 4 einzeln von einem Inspektionsmodul 9 geprüft werden könnten, da hierzu eine Lücke B zwischen zwei aufeinander folgenden Packungen 4 größer sein sollte als die Packungslänge L einer Packung 4.

Im gezeigten Beispiel weist das Inspektionsmodul 9 ein zweispuriges drittes Transportband 10 auf, das mit einer Geschwindigkeit v3 von beispielsweise 45 m/min betrieben wird. Dies hat zur Folge, dass der Abstand L + B = A3 von einer Packung 4 zur nächsten Packung 4 nach dem Bandübergang ungefähr 450 mm beträgt und die Packungen 4 von dem Inspektionsmodul 9 einzeln geprüft werden können. Der Abstand A3 bezieht sich auch auf eine letzte Packung 4 einer Spur S1 zur ersten Packung 4 einer anderen Spur S2.

Das Inspektionsmodul 9 kann ein Metalldetektor oder ein Röntgenkontrollgerät sein, um die Packung 4 auf Metallrückstände oder andere Fremdkörper zu kontrollieren. Es kann sich bei dem Inspektionsmodul 9 auch um einen Checkweigher handeln, der das Gewicht der einzelnen Packungen 4 ermittelt. Es ist auch üblich, einen Metalldetektor und einen Checkweigher hintereinander anzuordnen, beispielsweise wenn es sich bei den Produkten in der Verpackung 4 um Lebensmittel handelt.

Nach dem Inspektionsmodul 9 ist ein weiteres Transportband als Stauförderer 11 nachgeordnet, um den Abstand A4 zwischen in Produktionsrichtung R benachbarten Packungen 4 wieder zu verringern. Der Stauförderer 11 kann als Transportband mit einer Transportgeschwindigkeit v4 von beispielsweise 18 m/min oder als Rollenbahn ausgeführt sein.

Um die Packungen 4 kontrolliert und mit einer konstanten Geschwindigkeit in den Aufnahmebereich einer zweiten Umsetzvorrichtung 12 zu befördern, werden die Packungen 4 vom Stauförderer 11 auf ein weiteres Transportband 13 übergeben. Eine Kamera 14 ermittelt für beide Spuren S1, S2 die Position der Packungen 4 und übermittelt diese an eine nicht dargestellte Steuerung der zweiten Umsetzvorrichtung 12, die Teil der Sammelverpackungseinheit 15 ist. Die zweite Umsetzvorrichtung 12 ist vorzugsweise als Roboter ausgeführt, beispielsweise als 4-Achs-Delta-Roboter, der nacheinander die Packungen 4 von beiden Spuren S1 und S2 des Transportbands 13 aufnimmt und in einen Sammelbehälter 16 einlegt. Die Sammelbehälter 16 werden auf einem parallel zur Vereinzelungseinheit 7 angeordneten Transportband 17 der Sammelverpackungseinheit 15 zugeführt und nach dem Füllvorgang von der Sammelverpackungseinheit 15 einem nächsten Produktionsschritt zugeführt.

Die zweite Umsetzvorrichtung 12 weist eine Leistung auf, die mindestens der Leistung der Verpackungsmaschine 2 entspricht, also wenigstens 160 Packungen pro Minute, vorzugsweise 180 Packungen pro Minute, um auch Schwankungen der Leistung der Verpackungsmaschine 2 oder der Vereinzelungseinheit 7 sicher ausgleichen zu können, um die Leistung der gesamten Verpackungsanlage 1 zu maximieren.

## Patentansprüche

1. Verpackungsanlage (1), umfassend eine intermittierend arbeitende, innerhalb eines Arbeitstaktes Packungen (4) auf mehreren Spuren (S) produzierende Verpackungsmaschine (2), ein mehrspuriges Vereinzelungssystem (7), eine erste Umsetzvorrichtung (5), eine zweite Umsetzvorrichtung (12) und eine Sammelverpackungseinheit (15), wobei die erste Umsetzvorrichtung (5) dazu eingerichtet ist, im Betrieb Packungen (4) Spur (S) für Spur (S) der von der Verpackungsmaschine (2) bereitgestellten Spuren (S) von Packungen (4) nacheinander mit jeweils mehreren Packungen (4) pro Spur (S) auf unterschiedliche, versetzt nebeneinander liegende Spuren (S1, S2) eines Transportbandes (6) des Vereinzelungssystems (7) umzusetzen, wobei das Vereinzelungssystem (7) wenigstens zwei Transportbänder (6, 8, 10, 11, 13) aufweist, von denen jedes zwei oder mehr Spuren (S1, S2) aufweist, und das Vereinzelungssystem (7) dazu konfiguriert ist, den Abstand (A1) zwischen zwei in Produktionsrichtung (R) auf derselben oder auf unterschiedlichen Spuren (S1, S2) der Transportbänder (6, 8, 10, 11, 13) des Vereinzelungssystems (7) aufeinander folgenden Packungen (4) zu vergrößern..

2. Verpackungsanlage nach Anspruch 1, **dadurch gekennzeichnet, dass** das Vereinzelungssystem (7) wenigstens ein Inspektionsmodul (9) umfasst, um Packungen (4) einzeln zu prüfen, wobei das Inspektionsmodul (9) Packungen (4) auf einer Mehrzahl von Spuren (S1, S2) eines Transportbands (10) prüfen kann.

3. Verpackungsanlage nach Anspruch 2, **dadurch gekennzeichnet, dass** das Inspektionsmodul (9) ein Checkweigher, eine Metalldetektor oder ein Röntgenkontrollgerät ist.

4. Verpackungsanlage nach einem der Ansprüche, **dadurch gekennzeichnet, dass** die erste Umsetzvorrichtung (5) dazu konfiguriert ist, die in einer umzusetzenden Spur (S) enthaltenen Packungen (4) als Gruppe (G) gemeinsam auf ein erstes Transportband (6) des Vereinzelungssystems (7) umzusetzen.

5. Verpackungsanlage nach einem der vorangehenden Ansprüche, **dadurch gekennzeichnet, dass** wenigstens ein erstes und ein zweites Transportband (6, 8) vorgesehen sind, wobei das zweite Transportband (8) eine Transportgeschwindigkeit (v2) aufweist, die größer ist als eine Transportgeschwindigkeit (v1) des ersten Transportbands (6).

6. Verpackungsanlage nach einem der vorangehenden Ansprüche 1 bis 3, **dadurch gekennzeichnet, dass** die erste Umsetzvorrichtung (5) dazu konfiguriert ist, die in einer umzusetzenden Spur (S) enthaltenen Packungen (4) einzeln nacheinander auf ein erstes Transportband (6) des Vereinzelungssystems (7) umzusetzen, um den Abstand (A1) zweier aufeinander folgender Packungen (4) zu erhöhen.

7. Verpackungsanlage nach einem der Ansprüche 4 bis 6, **dadurch gekennzeichnet, dass** ein Transportband (11) als Stauförderer mit einer geringeren Transportgeschwindigkeit als das erste Transportband (6) vorgesehen ist, um den Abstand (A3, A4) zwischen den auf einer Spur (S1, S2) aufeinander folgenden Packungen (4) zu verringern.

8. Verpackungsanlage nach einem der vorangehenden Ansprüche, **dadurch gekennzeichnet, dass** die erste Umsetzvorrichtung (5) dazu eingerichtet ist, umzusetzende Spuren (S) von Packungen (4) alternierend auf zwei oder mehr Spuren (S1, S2) des ersten Transportbands (6) des Vereinzelungssystems (7) umzusetzen.

9. Verfahren zum Betrieb einer Verpackungsanlage (1), die eine intermittierend arbeitende, innerhalb eines Arbeitstaktes Packungen (4) auf mehreren Spuren (S) produzierende Verpackungsmaschine (2), ein Vereinzelungssystem (7) mit mehreren versetzt nebeneinander liegende Spuren (S1, S2), eine erste Umsetzvorrichtung (5), eine zweite Umsetzvorrichtung (12) und eine Sammelverpackungseinheit (15) umfasst, wobei die erste Umsetzvorrichtung (5) die von der Verpackungsmaschine (2) innerhalb eines Arbeitstaktes erzeugten Spuren (S) von Packungen (4) spurweise nacheinander mit jeweils mehreren Packungen (4) pro Spur (S) auf eine oder die mehreren versetzt nebeneinander liegenden Spuren (S1, S2) eines ersten Transportbands (6) des Vereinzelungssystems (7) umsetzt, wobei der Abstand (A1) von zwei auf derselben oder auf unterschiedlichen Spuren (S1, S2) aufeinanderfolgenden Packungen (4) auf dem Vereinzelungssystem (7) so weit vergrößert wird, dass eine Lücke (B) zwischen zwei aufeinander folgenden Packungen (4) größer ist als die Packungslänge (L) einer einzelnen Packung (4).

10. Verfahren nach Anspruche 9, **dadurch gekennzeichnet, dass** der Abstand (A3) der Packungen (4) nach einem Inspektionsmodul (9) mittels eines weiteren Transportbands (11) reduziert wird.

11. Verfahren nach einem der Ansprüche 9 oder 10, **dadurch gekennzeichnet, dass** die Packungen (4) vom Vereinzelungssystem (7) mittels wenigstens der zweiten Umsetzvorrichtung (12) in der Sammelverpackungseinheit (15) in einen Sammelbehälter (16) umgesetzt werden, wobei die Packungen (4) mehrspurig der zweiten Umsetzvorrichtung (12) zugeführt werden.

12. Verfahren nach einem der Ansprüche 9 bis 11, **dadurch gekennzeichnet, dass** die erste Umsetzvorrichtung (5) die Packungen (4) auf das erste Transportband (6) einzeln nacheinander absetzt, um den Abstand (A1) zwischen zwei aufeinander folgenden Packungen (4) so zu vergrößern, dass in dem Inspektionsmodul (9) die Prüfung einer einzelnen Packung (4) erfolgt.

13. Verfahren nach einem der Ansprüche 9 bis 11, **dadurch gekennzeichnet, dass** die erste Umsetzvorrichtung (5) die Packungen (4) als Gruppe (G) gleichzeitig auf das erste Transportband (6) absetzt und dass durch wenigstens ein zweites Transportband (8), das mit einer höheren Transportgeschwindigkeit (v2) als das erste Transportband (6) betrieben wird, der Abstand (A1) zwischen zwei aufeinanderfolgenden Packungen (4) so vergrößert wird, dass in dem Inspektionsmodul (9) die Prüfung einer einzelnen Packung (4) erfolgen kann.

14. Verfahren nach einem der Ansprüche 9 bis 13, **dadurch gekennzeichnet, dass** die Packungen (4) von einer mehrspurigen Verpackungsmaschine (2) an ein zweispuriges Vereinzelungssystem (7) übergeben werden.

15. Verfahren nach einem der Ansprüche 9 bis 14, **dadurch gekennzeichnet, dass** die Packungen (4) zweispurig entlang des Inspektionsmoduls (9) und zu der zweiten Umsetzvorrichtung (12) transportiert werden.

16. Verfahren nach einem der Ansprüche 9 bis 15, **dadurch gekennzeichnet, dass** die erste Umsetzvorrichtung (5) die Spuren (S) von Packungen (4) alternierend auf die zwei oder mehr Spuren (S1, S2) des ersten Transportbands (6) des Vereinzelungssystems (7) umsetzt.

## Claims

1. Packaging facility (1) comprising an intermittently operating packaging machine (2) producing packages (4) on several lanes (S) during each working cycle, a multi-lane separation system (7), a first transfer device (5), a second transfer device (12) and a group packaging unit (15), wherein the first transfer device (5) is configured, when operated, to consecutively transfer packages (4) lane (S) by lane (S) of the lanes (S) of packages (4) supplied by the packaging machine (2), each with several packages (4) per lane (S), onto different, mutually laterally displaced lanes (S1, S2) of a conveyor belt (6) of said separation system (7), wherein the separation system (7) comprises at least two conveyor belts (6, 8, 10, 11, 13), each conveyor belt comprising two or more lanes (S1, S2), and wherein the separation system (7) is configured to increase the distance (A1) between two consecutive packages (4) transported in the direction of production (R) one after the other on the same or on different lanes (S1, S2) of the conveyor belts (6, 8, 10, 11, 13) of said separation system (7).

2. Packaging facility according to claim 1, **characterized in that** said separation system (7) comprises at least one inspection module (9) to individually inspect packages (4), wherein said inspection module (9) can inspect packages (4) on a plurality of lanes (S1, S2) of a conveyor belt (10).

3. Packaging facility according to claim 2, **characterized in that** said inspection module (9) is a check weigher, a metal detector, or an X-ray inspection unit.

4. Packaging facility according to one of the preceding claims, **characterized in that** said first transfer device (5) is configured to transfer together as a group (G) said packages (4), contained in a lane (S) to be transferred, onto a first conveyor belt (6) of said separation system (7).

5. Packaging machine according to one of the preceding claims, **characterized in that** at least one first and one second conveyor belt (6, 8) are provided, wherein said second conveyor belt (8) has a conveying speed (v2) being greater than a conveying speed (v1) of said first conveyor belt (6).

6. Packaging facility according to one of claims 1 to 3, **characterized in that** said first transfer device (5) is configured to individually transfer said packages (4), contained in a lane (S) to be transferred, consecutively onto a first conveyor belt (6) of said separation system (7) in order to increase the distance (A1) of two consecutive packages (4).

7. Packaging facility according to one of claims 4 to 6, **characterized in that** a conveyor belt (11) is provided as an accumulation conveyor having a lower conveying speed than said first conveyor belt (6), in order to reduce the distance (A3, A4) between said consecutive packages (4) on a lane (S1, S2).

8. Packaging facility according to one of the preceding claims, **characterized in that** said first transfer device (5) is adapted to transfer lanes (S) of packages (4) to be transferred alternatingly onto two or more lanes (S1, S2) of said first conveyor belt (6) of said separation system (7).

9. Method for operating a packaging facility (1), the packaging facility comprising an intermittently operating packaging machine (2) producing packages (4) on multiple lanes (S) during each working cycle, a separation system (7) comprising several lanes (S1, S2) laterally displaced with respect to each other, a first transfer device (5), a second transfer device (12) and a group packaging unit (15), wherein the first transfer device (5) transfers the lanes (S) of packages (4) produced by the packaging machine (2) within one working cycle lane by lane with several packages (4) per lane (S) consecutively onto one or the several mutually adjacent lanes (S1, S2) of a first conveyor belt (6) of the separation system (7), wherein the distance (A1) between two consecutive packages (4) on the same or on different lanes (S1, S2) is increased by the separation system (7) to the extent that a gap (B) between two consecutive packages (4) is greater than the package length (L) of an individual package (4).

10. Method according to claim 9, **characterized in that** the distance (A3) of said packages (4) downstream of an inspection module (9) is reduced by using a further conveyor belt (11).

11. Method according to one of the claims 9 or 10, **characterized in that** said packages (4) are transferred from said separation system (7) by at least said second transfer device (12) in said group packaging unit (15) into a collection container (16), wherein said packages (4) are supplied in multiple lanes to said second transfer device (12).

12. Method according to one of the preceding claims 9 to 11, **characterized in that** said first transfer device (5) places said packages (4) onto said first conveyor belt (6)
consecutively one at a time in order to increase the distance (A1) between two consecutive packages (4) such that inspection of an individual package (4) is performed in said inspection module (9).

13. Method according to one of the preceding claims 9 to 11, **characterized in that** said first transfer device (5) places said packages (4) simultaneously as a group (G) onto said first conveyor belt (6), and that the distance (A1) between two consecutive packages (4) is increased by at least one second conveyor belt (8) being operated at a higher conveying speed (V2) than said first conveyor belt (6), such that inspection of an individual package (4) can be performed in said inspection module (9).

14. Method according to one of the claims 9 to 13, **characterized in that** said packages (4) are transferred from a multi-lane packaging machine (2) to a double-lane separation system (7).

15. Method according to one of the claims 9 to 14, **characterized in that** said packages (4) are conveyed in a double lane along said inspection module (9) and to said second transfer device (12).

16. Method according to one of the claims 9 to 15, **characterized in that** said first transfer device (5) transfers said lanes (S) of packages (4) alternatingly onto two or more lanes (S1, S2) of said first conveyor belt (6) of said separation system (7).

## Revendications

1. Installation d'emballage (1) comprenant une machine d'emballage (2) travaillant de manière intermittente et produisant des emballages (4) sur plusieurs voies (S) au cours d'un cycle de travail, un système séparateur (7) à voies multiples, un premier dispositif de transfert (5), un deuxième dispositif de transfert (12) et une unité d'emballage groupé (15), installation
dans laquelle le premier dispositif de transfert (5) est conçu pour, en fonctionnement, transférer des emballages (4), voie (S) par voie (S), de voies (S) d'emballages (4) produites par la machine d'emballage (2), successivement avec à chaque fois plusieurs emballages (4) par voie (S), sur des voies différentes (S1, S2) placées de manière mutuellement décalée côte à côte, d'une bande de transport (6) du système séparateur (7), et dans laquelle le système séparateur (7) comprend au moins deux bandes de transport (6, 8, 10, 11, 13) dont chacune présente deux voies (S1, S2) ou davantage, et le système séparateur (7) est configuré pour augmenter la distance d'espacement (A1) entre deux emballages (4) se succédant mutuellement dans la direction de production (R) sur la même ou sur des voies différentes (S1, S2) des bandes de transport (6, 8, 10, 11, 13) du système séparateur (7).

2. Installation d'emballage selon la revendication 1, **caractérisée en ce que** le système séparateur (7) comprend au moins un module d'inspection (9) en vue de contrôler des emballages (4) individuellement, le module d'inspection (9) étant en mesure de contrôler des emballages (4) sur une pluralité de voies (S1, S2) d'une bande de transport (10).

3. Installation d'emballage selon la revendication 2, **caractérisée en ce que** le module d'inspection (9) est une trieuse pondérale, un détecteur de métaux ou un appareil de contrôle par rayons X.

4. Installation d'emballage selon l'une des revendications précédentes, **caractérisée en ce que** le premier dispositif de transfert (5) est configuré pour transférer les emballages (4) contenus dans une voie (S), en commun en tant que groupe (G), sur une première bande de transport (6) du système séparateur (7).

5. Installation d'emballage selon l'une des revendications précédentes, **caractérisée en ce que** sont prévues au moins une première et une deuxième bande de transport (6, 8), la deuxième bande de transport (8) présentant une vitesse de transport (v2), qui est supérieure à la vitesse de transport (v1) de la première bande de transport (6).

6. Installation d'emballage selon l'une des revendications précédentes 1 à 3, **caractérisée en ce que** le premier dispositif de transfert (5) est configuré pour transférer les emballages (4) contenus dans une voie (S) à transférer, individuellement et successivement sur une première bande de transport (6) du système séparateur (7), en vue d'augmenter la distance d'espacement (A1) entre deux emballages (4) successifs.

7. Installation d'emballage selon l'une des revendications 4 à 6, **caractérisée en ce qu'**il est prévu une bande de transport (11) en tant que transporteur d'accumulation avec une vitesse de transport inférieure à celle de la première bande de transport (6), en vue de diminuer la distance d'espacement (A3, A4) entre les emballages (4) se succédant sur une voie (S1, S2).

8. Installation d'emballage selon l'une des revendications précédentes, **caractérisée en ce que** le premier dispositif de transfert (5) est conçu pour transférer des voies (S) d'emballages (4), de manière alternée sur deux voies (S1, S2) ou davantage de la première bande de transport (6) du système séparateur (7).

9. Procédé pour faire fonctionner une installation d'emballage (1) comprenant une machine d'emballage (2) travaillant de manière intermittente et produisant des emballages (4) sur plusieurs voies (S) au cours d'un cycle de travail, un système séparateur (7) avec plusieurs voies (S1, S2) placées de manière mutuellement décalée côte à côte, un premier dispositif de transfert (5), un deuxième dispositif de transfert (12) et une unité d'emballage groupé (15), procédé
d'après lequel le premier dispositif de transfert (5) transfère les voies (S) d'emballages (4) produites par la machine d'emballage (2) pendant un cycle, successivement par voie, avec à chaque fois plusieurs emballages (4) par voie (S), sur une ou les plusieurs voies (S1, S2) placées de manière mutuellement décalée côte à côte, d'une première bande de transport (6) du système séparateur (7), et
d'après lequel la distance d'espacement (A1) de deux emballages (4) se succédant mutuellement sur la même voie ou des voies différentes (S1, S2) est augmentée dans le système séparateur (7), de manière à ce qu'un intervalle (B) entre deux emballages (4) successifs soit plus grand que la longueur d'emballage (L) d'un emballage (4) individuel.

10. Procédé selon la revendication 9, **caractérisé en ce que** la distance d'espacement (A3) des emballages (4) est diminuée après un module d'inspection (9), au moyen d'une autre bande de transport (11).

11. Procédé selon la revendication 9 ou la revendication 10, **caractérisé en ce que** les emballages (4) sont transférés à partir du système séparateur (7), au moyen dudit au moins un deuxième dispositif de transfert (12) de l'unité d'emballage groupé (15), dans un contenant de regroupement (16), les emballages (4) étant amenés selon plusieurs voies au deuxième dispositif de transfert (12).

12. Procédé selon l'une des revendications 9 à 11, **caractérisé en ce que** le premier dispositif de transfert (5) dépose les emballages (4) individuellement de manière successive sur la première bande de transport (6), en vue d'augmenter la distance d'espacement (A1) entre deux emballages (4) successifs de manière à effectuer dans le module d'inspection (9), le contrôle d'un seul emballage (4) individuel.

13. Procédé selon l'une des revendications 9 à 11, **caractérisé en ce que** le premier dispositif de transfert (5) dépose les emballages (4) simultanément sous forme de groupe (G) sur la première bande de transport (6), et **en ce que** par l'intermédiaire d'au moins une deuxième bande de transport (8), que l'on fait fonctionner avec une vitesse de transport (v2) plus élevée que celle de la première bande de transport (6), on augmente la distance d'espacement (A1) entre deux emballages (4) qui se succèdent, de manière à pouvoir effectuer dans le module d'inspection (9), le contrôle d'un seul emballage (4) individuel.

14. Procédé selon l'une des revendications 9 à 13, **caractérisé en ce que** les emballages (4) sont transférés à partir d'une machine d'emballage (2) à voies multiples, à un système séparateur (7) à deux voies.

15. Procédé selon l'une des revendications 9 à 14, **caractérisé en ce que** les emballages (4) sont transportés sur deux voies le long du module d'inspection (9) et vers le deuxième dispositif de transfert (12).

16. Procédé selon l'une des revendications 9 à 15, **caractérisé en ce que** le premier dispositif de transfert (5) transfère les voies (S) d'emballages (4) alternativement sur les deux voies (S1, S2) ou davantage de la première bande de transport (6) du système séparateur (7).
